# EUROPEAN PATENT APPLICATION

(11) **EP 4 764 311 A1**
(43) Date of publication of application: **24.06.2026**
(21) Application number: 25216337.3
(22) Date of filing: 17.11.2025
(51) Int. Cl.: F23R 3/14, F23R 3/28

(54) **FUEL AND AIR INJECTION APPARATUS**

(30) Priority: 17.12.2024 GB 202418513
(71) Applicant: Rolls-Royce plc, London N1 9FX (GB)
(72) Inventor: Ravikanti, Murthy, Derby, DE24 8BJ (GB); Rimmer, John, Derby, DE24 8BJ (GB)
(74) Representative: Rolls-Royce plc

(57) **Abstract**

The disclosure relates to apparatus for fuel and air injection into a combustion chamber of a gas turbine engine and to a gas turbine engine comprising such an apparatus. Example embodiments include an apparatus (200) for fuel and air injection into a combustion chamber (201) of a gas turbine engine (10), the apparatus (200) comprising: back panel (202) having front and back faces (203, 204), an aperture (205) configured to receive a fuel injector (206) and a plurality of air inlets (207) arranged around the aperture (205); a heatshield panel (208) having front and back faces (209, 210), the heatshield panel (208) having a central aperture (212) and an annular side wall (211) mounted against the front face of the back panel to form a cavity (213) between the back face of the heatshield panel and the front face of the back panel (202); and an annular swirler assembly (214) disposed in the cavity (213) between the back panel (202) and the heatshield panel (208), the annular swirler assembly (214) having a central passage (215) for flow of an air and fuel mixture into the combustion chamber (201) and a flange (216) engaged with first and second grooves (217a, 217b) in the back face (210) of the heatshield panel (208) and the front face (203) of the back panel (202) respectively.

## Description

### CROSS REFERENCE TO RELATED APPLICATIONS

This represents the first application directed towards the subject-matter.

### FIELD

This disclosure relates to apparatus for fuel and air injection into a combustion chamber of a gas turbine engine and to a gas turbine engine comprising such an apparatus.

### BACKGROUND

A known gas turbine engine combustion chamber arrangement comprises a combustion chamber and a plurality of rich burn fuel injectors. The combustion chamber comprises an upstream end wall which has a plurality of apertures. Each fuel injector comprises a fuel feed arm and a fuel injector head having an air-blast fuel injector. The fuel injector head of each fuel injector locates coaxially in a corresponding one of the apertures in the upstream wall of the combustion chamber. The air-blast fuel injector comprises an air swirler having a coaxial arrangement of an inner air swirler passage, an intermediate air swirler passage and an outer air swirler passage. Each air swirler passage comprises an axial flow swirler. A fuel supply passage is arranged to supply fuel to the inner air swirler passage. In one example, EP3524886 discloses an air swirler comprising a coaxial arrangement of an inner air swirler passage and an outer air swirler passage, each air swirler passage comprising a radial air swirler, the air swirler comprising first, second and third coaxially arranged annular members.

During operation of the gas turbine engine, high temperature differentials are setup across each injector assembly from a difference between the temperature of air and temperature of fuel entering each assembly. The air supply may for example be over 300°C while the fuel temperature may be around ambient temperatures. This temperature difference can result in high thermal stresses being setup across each injector assembly. These stresses are further increased if the temperature of the fuel entering the injector assembly is lower, such as in a hydrogen fuelled gas turbine engine where the fuel may be at temperatures well below 0°C. Higher thermal stresses can result in higher thermal fatigue, which can shorten the lifespan of the injector assembly. A general problem may therefore be defined as how to reduce or minimise thermal stresses in a fuel and air injection assembly for a gas turbine engine, in particular for a hydrogen-fuelled gas turbine engine.

### SUMMARY

According to an aspect there is provided an apparatus for fuel and air injection into a combustion chamber of a gas turbine engine, the apparatus comprising:
a back panel having front and back faces, an aperture configured to receive a fuel injector and a plurality of air inlets arranged around the aperture;
a heatshield panel having front and back faces, the heatshield panel having a central aperture and an annular side wall mounted against the front face of the back panel to form a cavity between the back face of the heatshield panel and the front face of the back panel; and
an annular swirler assembly disposed in the cavity between the back panel and the heatshield panel, the annular swirler assembly having a central passage for flow of an air and fuel mixture into the combustion chamber and a flange engaged with first and second grooves in the back face of the heatshield panel and the front face of the back panel respectively.

The flange may extend from an outer circumference of the annular swirler assembly.

The flange may comprise a front edge engaged in the first groove in the heatshield panel and a back edge engaged in the second groove in the back panel.

The annular swirler assembly may comprise a plurality of air swirlers arranged around the central passage, each air swirler configured to direct air radially inwardly from the plurality of air inlets towards the central passage.

The cavity may encompass the air inlets in the back panel.

The annular swirler assembly may comprise a plurality of air swirlers arranged around the central passage, each air swirler configured to direct air axially from the plurality of air inlets towards the combustion chamber.

The apparatus may comprise a fuel injector received in the aperture of the back panel, the fuel injector configured to direct fuel axially into the combustion chamber.

The fuel injector may comprise an air passage configured to direct air axially into the combustion chamber.

The fuel injector may comprise an air swirler disposed in the air passage.

The fuel injector may comprise a flange configured to seal against the back face of the back panel.

The apparatus may further comprise one or more guide vanes configured to provide a converging and/or diverging flow path into the combustion chamber.

The one or more guide vanes may extend from the annular swirler assembly and/or the front face of the heatshield panel into the combustion chamber.

According to a second aspect there is provided a gas turbine engine comprising combustion equipment incorporating the apparatus according to the first aspect.

The gas turbine engine may be configured to operate using hydrogen fuel.

### BRIEF DESCRIPTION OF THE DRAWINGS

Embodiments will now be described by way of example only with reference to the accompanying drawings, in which:
FIG. 1 is a schematic cross-sectional drawing of an example gas turbine engine;
FIG. 2 is a schematic cross-sectional drawing of an example fuel and air injection assembly;
FIG. 3 is a schematic partial cross-sectional drawing of an alternative example fuel and air injection assembly;
FIG. 4 is a schematic partial cross-sectional drawing of a further alternative example fuel and air injection assembly with axial air swirlers;
FIG. 5 is a schematic partial cross-sectional drawing of a further alternative example fuel and air injection assembly with axial air swirlers with an additional diverging guide vane; and
FIG. 6 is a schematic partial cross-sectional drawing of a further alternative example fuel and air injection assembly.

### DETAILED DESCRIPTION

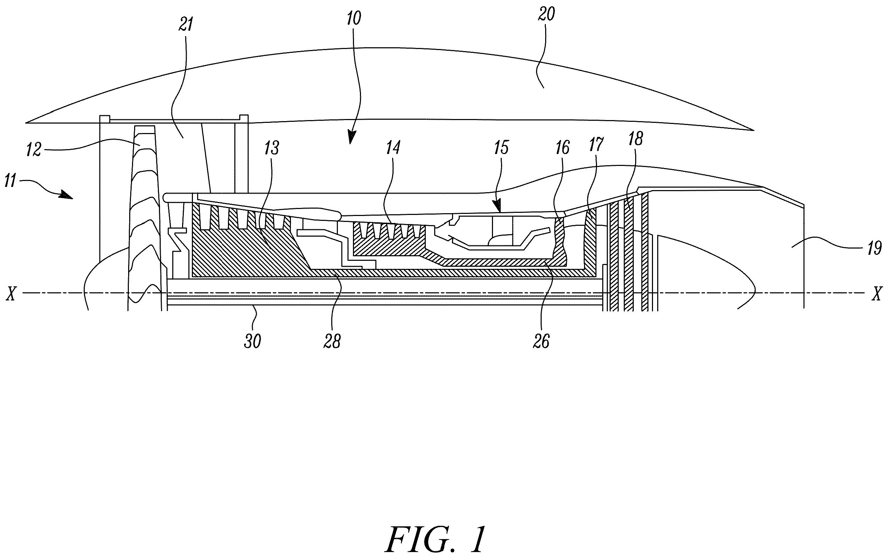

With reference to Fig. 1, a partial sectional view of an example gas turbine engine 10 is illustrated, having a principal and rotational axis X. The engine 10 comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and an exhaust nozzle 19. A nacelle 20 generally surrounds the engine 10 and defines both the intake 11 and the exhaust nozzle 19.

The gas turbine engine 10 works in a conventional manner so that air entering the intake 11 is accelerated by the fan 12 to produce two air flows. A first air flow enters the intermediate pressure compressor 13 and a second air flow passes through a bypass duct 21, providing propulsive thrust. The intermediate pressure compressor 13 compresses the air flow directed into it before delivering that air to the high-pressure compressor 14 where further compression takes place.

The compressed air exhausted from the high-pressure compressor 14 is directed into the combustion equipment 15 where it is mixed with fuel and the mixture is combusted. The resultant hot combustion products then expand through, and thereby drive, the high, intermediate and low-pressure turbines 16, 17, 18 before being exhausted through the nozzle 19, providing additional propulsive thrust. The high, intermediate and low pressure turbines 17, 18 and 19 respectively drive the high pressure compressor 15, intermediate pressure compressor 14 and fan 13 respectively, each by a suitable respective interconnecting shaft 26, 28, 30.

Other gas turbine engines to which the present disclosure may be applied may have alternative configurations. By way of example, such engines may have an alternative number of interconnecting shafts (e.g. two) and/or an alternative number of compressors and/or turbines. Further, the engine may comprise a gearbox provided in the drive train from a turbine to a compressor and/or fan.

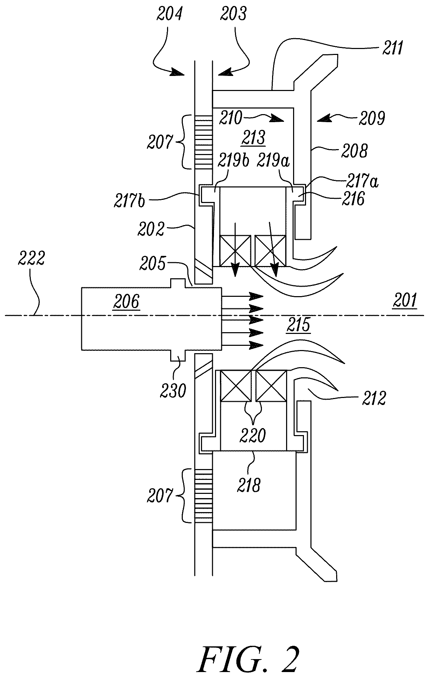

Figure 2 illustrates an apparatus 200 for fuel and air injection into a combustion chamber 201 of a gas turbine engine, which may for example be an engine 10 of the type illustrated in Fig. 1. The apparatus 200 may form part of the combustion equipment 15 of the engine 10. The apparatus 200 comprises a back panel, or air meter panel, 202 having front and back faces 203, 204. The back panel 202 forms part of the upstream wall of the combustion chamber 201. The back panel 202 comprises an aperture 205 configured to receive a fuel injector 206, which is configured to direct fuel axially into the combustion chamber 201. The fuel injector 206 comprises a flange 230, which is configured to seal against the back face 204 of the back panel 202.

A plurality of air inlets 207 are arranged around the aperture 205, the air inlets 207 passing through the back panel 202 between the front and back faces 203, 204. The air inlets 207 may be arranged in an annular array around the aperture 205.

The apparatus 200 is generally rotationally symmetric about a central axis 222 defining an axial direction, with a radial direction being defined as being orthogonal to the central axis 222. A similar rotational symmetry also applies to the other embodiments illustrated in Figures 2 to 6. The central axis 222 is generally parallel to the rotational axis of the gas turbine engine in which the apparatus 200 is provided.

The apparatus 200 further comprises a heatshield panel 208 having front and back faces 209, 210 and an annular side wall 211 mounted against the front face 203 of the back panel 202. The heatshield panel 208 may be mounted to the back panel 202 by being bolted to the back panel 202. The heatshield panel 208 has a central aperture 212 aligned with, i.e. concentric with, the aperture 205 in the back panel 202. Mounting the heatshield panel 208 against the back panel 202 forms a cavity 213 between the back face 210 of the heatshield panel 208 and the front face 203 of the back panel 202, the cavity 213 in this example encompassing the air inlets 207.

An annular swirler assembly 214 is sandwiched between the back panel 202 and heatshield panel, in this case disposed in the cavity 213 between the back panel 202 and the heatshield panel 208. The annular swirler 214 has a central passage 215 for flow of an air and fuel mixture into the combustion chamber 201 in a generally axial direction parallel to the axis 222. The fuel in the mixture is provided by the fuel injector 206 and at least a portion of the air in the mixture is provided by air passing through the air inlets 207 and the annular swirler assembly 214. The annular swirler assembly 214 comprises a circumferential flange 216 that is engaged with corresponding first and second grooves 217a, 217b in the back face 210 of the heatshield panel 208 and the front face 203 of the back panel 202 respectively. The flange 216 in the apparatus 200 in Figure 2 extends from an outer circumference 218 of the annular swirler assembly 214, the flange 216 having a front edge 219a engaged in the first groove 217a in the heatshield plate 208 and a back edge 219b engaged in the second groove 217b in the back panel 202. The flange 216 of the swirler assembly 214 may be press fitted into the first and second grooves 217a, 217b of the heatshield panel 208 and back panel 202 respectively.

Mounting the annular swirler assembly 214 with the flange 216 engaged in the corresponding first and second grooves 217a, 217b in the heatshield and back plates 208, 202 allows for parts of the annular swirler assembly 214 to expand and contract radially due to large temperature differentials that are set up across the assembly 214 during operation. This has the effect of extending the life of the assembly 214 through reducing fatigue due to thermal stresses.

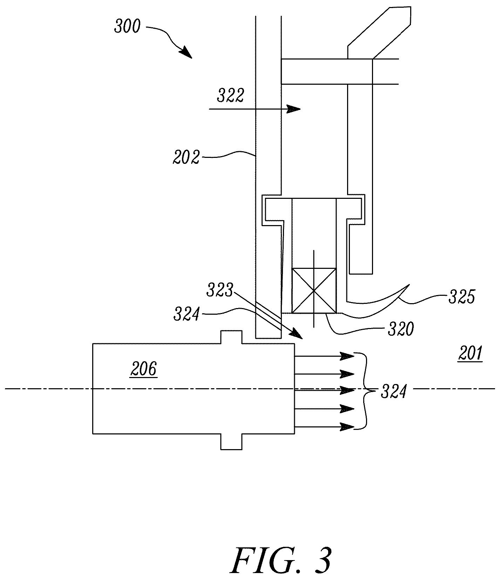

In the arrangement illustrated in Figure 2, the annular swirler assembly 214 comprises a plurality of air swirlers 220 arranged around the central aperture 212, each air swirler 220 configured to direct air radially inwardly from the plurality of air inlets 207 in the back panel 202 towards the central passage 215, as indicated by arrows 221. The plurality of air swirlers 220 may be arranged as an annular array of pairs of air swirlers as shown in Figure 2. In an alternative arrangement 300 illustrated in Figure 3, the plurality of air swirlers 320 may be in the form of an annular array of singular air swirlers sandwiched between the heatshield panel 208 and back panel 202, resulting in a more compact arrangement. The apparatus 300 illustrated in Figure 3 may be otherwise similar to that in Figure 2 with corresponding features to those in Figure 2 and described above.

Cooling air 226 for the heatshield panel 208 is also provided by the air entering the cavity 213 through the air inlets 207. The direction of flow of the heatshield panel cooling air 226 can be axial, radial, tangential or a combination. Further cooling air 227 for cooling the back side of the heatshield panel 208 and combustor wall may also be provided, also provided by the same air entering the cavity 213 through the air inlets 207. The direction of flow of the further cooling air 227 can also be axial, radial, tangential or a combination.

Figure 3 also illustrates the general direction of air and fuel flows through the apparatus 300. Air flow is indicated by arrows 321, 322, 323, with arrow 321 indicating inward radial air flow through each radial air swirler 320, arrow 322 indicating axial air flow through the back panel 202, and arrow 323 indicating optional additional axial air flow through a further array of holes 324 passing through the back panel 202 around the fuel injector 206 to prevent flashback during operation. Fuel flow axially through the fuel injector 206 into the combustion chamber 201 is indicated by arrows 324. Similar air and fuel flows apply for the embodiments in Figure 2.

As with the Figure 2 example, cooling air 326 for the heatshield panel 208 is also provided by the airflow 322 entering the cavity 213 through the air inlets (not shown in Figure 3). The direction of flow of the heatshield panel cooling air 326 can be axial, radial, tangential or a combination. Further cooling air 327 for cooling the back side of the heatshield panel 208 and combustor wall may also be provided, also provided by the same airflow 322 entering the cavity 213. The direction of flow of the further cooling air 327 can also be axial, radial, tangential or a combination.

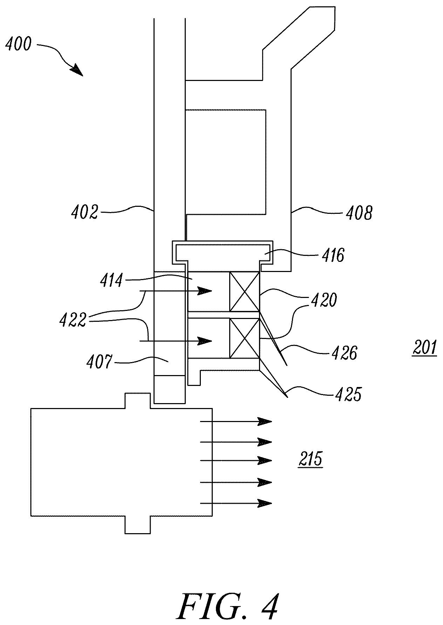

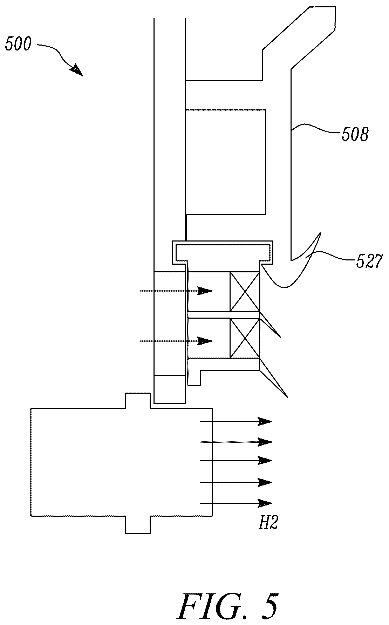

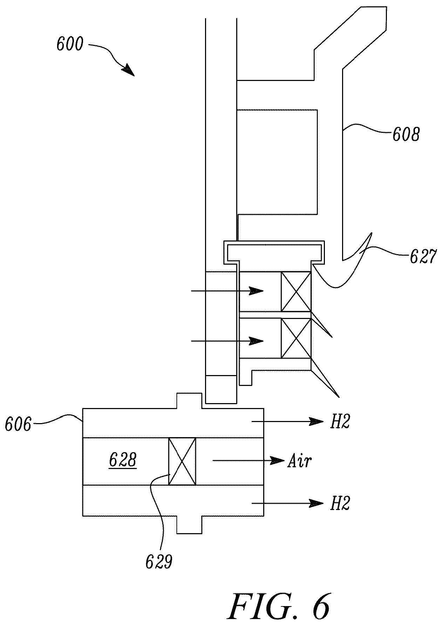

Figures 4, 5 and 6 illustrate alternative arrangements 400, 500, 600 in which the annular swirler assembly 414 comprises a plurality of air swirlers 420 arranged around the central aperture 212, each air swirler 420 being configured to direct air axially from the plurality of air inlets 407 towards the combustion chamber 201, with arrows 422 in Figure 4 indicating the air supply passing through the back panel 402 and through the air swirlers 420. As with the embodiments in Figures 2 and 3, the annular swirler assembly 414 is mounted between the back panel 402 and heatshield panel 408 with a circumferential flange 416 located in corresponding grooves in the back panel 402 and heatshield panel 408. Figures 5 and 6 illustrate similar arrangements.

In the arrangement of Figure 4, cooling air 426 for the heatshield panel 408 is also provided by airflow 423 entering the cavity 213 through the air inlets (not shown in Figure 4). The direction of flow of the heatshield panel cooling air 426 can be axial, radial, tangential or a combination. Further cooling air 427 for cooling the back side of the heatshield panel 408 and combustor wall may also be provided, also provided by the same airflow 423 entering the cavity 213. The direction of flow of the further cooling air 427 can also be axial, radial, tangential or a combination. Similar cooling airflow arrangements may be provided in the arrangements illustrates in Figures 5 and 6.

In each of the arrangements illustrated in Figures 2 to 6, one or more guide vanes are provided, the guide vanes configured to provide a converging and/or diverging flow path into the combustion chamber 201. In Figure 2, a pair of guide vanes 225, 226 extend from the annular swirler assembly 214 into the combustion chamber 201. In Figure 3, a single guide vane 325 extends from the annular swirler assembly 314 into the combustion chamber 201. In Figures 4, 5 and 6 a pair of guide vanes 425, 426 extend from the annular swirler assembly 414 into the combustion chamber, the guide vanes 425, 426 providing a converging air flow. Guide vanes may additionally or alternatively be provided that extend from the front face of the heatshield panel 508, 608, as illustrated in the embodiments in Figures 5 and 6, which illustrate additional guide vanes 527, 627 that provide a diverging air flow into the combustion chamber 201.

The apparatus 600 illustrated in Figure 6 comprises a fuel injector 606 having an air passage 628 through which an additional axial air flow can be provided along with the fuel supply. The air passage 628 in this case is in the form of a central channel or passage, which is surrounded by an annular fuel passage. An additional air swirler 629 may be provided in the air passage 628. Figure 6 illustrates the flow of fuel (in this case hydrogen) in a generally axial direction through the fuel injector 606 along with a parallel flow of air through the passage 628 of the fuel injector 606. The additional air flow through the fuel injector may aid in mixing of fuel and air prior to combustion.

Each of the embodiments illustrated in Figures 2 to 6 and described above may be incorporated in combustion equipment of a gas turbine engine, for example of the type illustrated in Figure 1 and described above. The gas turbine engine may be configured to operate using hydrogen fuel, which results in a greater temperature differential between the fuel supply provided through the fuel injector and the air supply provided through the air swirlers. Hydrogen fuel may for example be provided at temperatures at around -100°C, while the air supply may be at temperatures around +300°C, resulting in a large temperature differential across the apparatus. The resulting differential thermal expansion can be accommodated by the mounting arrangement involving the circumferential flange, which allows for unconstrained radial expansion of the air swirlers in the annular air swirler assembly. The embodiments described herein are thereby particularly advantageous for use in a hydrogen fuelled gas turbine engine, although may also be advantageous for conventional gas turbine engines due to the extended thermal fatigue life that may be expected to result.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

Other embodiments may also be within the scope of the invention, which is defined by the appended claims.

## Claims

1. An apparatus (200, 300, 400, 500, 600) for fuel and air injection into a combustion chamber (201) of a gas turbine engine (10), the apparatus (200) comprising:
a back panel (202) having front and back faces (203, 204), an aperture (205) configured to receive a fuel injector (206) and a plurality of air inlets (207) arranged around the aperture (205);
a heatshield panel (208) having front and back faces (209, 210), the heatshield panel (208) having a central aperture (212) and an annular side wall (211) mounted against the front face of the back panel to form a cavity (213) between the back face of the heatshield panel and the front face of the back panel (202); and
an annular swirler assembly (214) disposed in the cavity (213) between the back panel (202) and the heatshield panel (208), the annular swirler assembly (214) having a central passage (215) for flow of an air and fuel mixture into the combustion chamber (201) and a flange (216) engaged with first and second grooves (217a, 217b) in the back face (210) of the heatshield panel (208) and the front face (203) of the back panel (202) respectively.

2. The apparatus (200, 300, 400, 500, 600) of claim 1, wherein the flange (216) extends from an outer circumference (218) of the annular swirler assembly (214).

3. The apparatus (200, 300, 400, 500, 600) of claim 2, wherein the flange (216) comprises a front edge (219a) engaged in the first groove (217a) in the heatshield panel (208) and a back edge (219b) engaged in the second groove (217b) in the back panel (202).

4. The apparatus (200, 300) of any preceding claim, wherein the annular swirler assembly (214) comprises a plurality of air swirlers (220, 320) arranged around the central passage (215), each air swirler (220, 320) configured to direct air radially inwardly from the plurality of air inlets (207) towards the central passage (215).

5. The apparatus (200, 300) of claim 4, wherein the cavity (213) encompasses the air inlets (207) in the back panel (202).

6. The apparatus (400, 500, 600) of any one of claims 1 to 3, wherein the annular swirler assembly (414) comprises a plurality of air swirlers arranged around the central passage (215), each air swirler configured to direct air axially from the plurality of air inlets (407) towards the combustion chamber (201).

7. The apparatus (200, 300, 400, 500, 600) of any preceding claim, comprising a fuel injector (206) received in the aperture (205) of the back panel (202), the fuel injector (206) configured to direct fuel axially into the combustion chamber (201).

8. The apparatus (600) of claim 7, wherein the fuel injector (606) comprises an air passage (628) configured to direct air axially into the combustion chamber (201).

9. The apparatus (600) of claim 8, wherein the fuel injector (606) comprises an air swirler (629) disposed in the air passage (628).

10. The apparatus (200, 300, 400, 500, 600) of any one of claims 7 to 9, wherein the fuel injector (206, 606) comprises a flange (230) configured to seal against the back face (204) of the back panel (202).

11. The apparatus (200, 300, 400, 500, 600) of any preceding claim, further comprising one or more guide vanes (225, 226, 325, 425, 426, 527, 627) configured to provide a converging and/or diverging flow path into the combustion chamber (201).

12. The apparatus (200, 300, 400, 500, 600) of claim 11, wherein the one or more guide vanes (225, 226, 325, 425, 426, 527, 627) extend from the annular swirler assembly (214, 414) and/or the front face (209) of the heatshield panel (208, 408) into the combustion chamber (201).

13. A gas turbine engine (10) comprising combustion equipment (15) incorporating the apparatus (200, 300, 400, 500, 600) according to any preceding claim.

14. The gas turbine engine (10) of claim 11, wherein the gas turbine engine (10) is configured to operate using hydrogen fuel.
